(19) Europäisches Patentamt / European Patent Office / Office européen des brevets

(11) **EP 1 813 962 A1**

(12) **EUROPÄISCHE PATENTANMELDUNG**

(43) Veröffentlichungstag:
**01.08.2007 Patentblatt 2007/31**

(21) Anmeldenummer: 06001676.3

(22) Anmeldetag: **27.01.2006**

(51) Int Cl.:
*G01S 17/50* (2006.01)　　*G01S 17/08* (2006.01)
*G01S 7/491* (2006.01)　　*G01B 9/02* (2006.01)
*G01P 3/36* (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Polytec GmbH**
**76337 Waldbronn (DE)**

(72) Erfinder: **Rembe, Christian, Dr.**
**76337 Waldbronn (DE)**

(74) Vertreter: **Kaiser, Magnus et al**
**Lemcke, Brommer & Partner**
**Patentanwälte**
**Bismarckstrasse 16**
**76133 Karlsruhe (DE)**

(54) **Messvorrichtung und Verfahren zur optischen Vermessung eines Objektes**

(57)　Die Erfindung betrifft eine Messvorrichtung zur optischen Vermessung eines Objektes 13a, insbesondere zur Vermessung einer Bewegung des Objektes, umfassend ein Interferometer 20 mit einem Messstrahlausgang 12, einem Reflektionsstrahleingang 14, einem Überlagerungsstrahlausgang 15 und einer Lichtquelle 1 zur Erzeugung eines Lichtstrahls 8, einen optischen Detektor 16, welcher derart an dem Überlagerungsstrahlausgang 15 des Interferometers 20 angeordnet ist, dass ein aus dem Überlagerungsstrahlausgang 15 austretender Lichtstrahl auf den Detektor 16 trifft und eine Signalverarbeitungseinheit 17, welche mit dem Detektor 16 verbunden und derart ausgeführt ist, dass sie Messsignale des Detektors 16 messen kann.

Wesentlich ist, dass das Interferometer 20 einen Strahlschalteingang 18 aufweist und derart ausgeführt ist, dass nur bei einem am Strahlschalteingang 18 anliegenden Schaltsignal ein Lichtstrahl aus dem Messstrahlausgang 12 im wesentlichen in dem vorgegebenen Winkel austritt und dass die Signalverarbeitungseinheit 17 einen Strahlschaltausgang aufweist, welcher mit dem Strahlschalteingang 18 des Interferometers 20 verbunden ist, wobei die Signalverarbeitungseinheit derart ausgeführt ist, dass sie während der Messung von Messsignalen ein Schaltsignal an den Strahlschalteingang 18 des Interferometers 20 und nach abgeschlossener Messung der Messsignale kein Schaltsignal an den Strahlschalteingang 18 des Interferometers 20 abgibt.

Figur 1

EP 1 813 962 A1

**Beschreibung**

Die Erfindung betrifft eine Messvorrichtung und ein Verfahren zur optischen Vermessung eines Objektes nach den Oberbegriffen der Patentansprüche 1 und 18.

Demnach umfasst die Messvorrichtung ein Interferometer mit einer Lichtquelle, wobei das Interferometer derart ausgeführt ist, dass ein von der Lichtquelle erzeugter Lichtstrahl in mindestens zwei Teilstrahlen aufgeteilt wird.

Ein erster Teilstrahl wird als Messstrahl zur Bestrahlung eines Messpunktes auf dem zu vermessenden Objekt verwendet. Hierzu tritt der Messstrahl im Wesentlichen in einem vorgegebenen Winkel aus dem Interferometer aus. Der von dem Objekt reflektierte Messstrahl tritt als Reflektionsstrahl durch einen Reflektionsstrahleingang in das Interferometer ein und wird dort mit einem zweiten Teilstrahl überlagert. Der zweite Teilstrahl mit dem überlagerten Reflektionsstrahl tritt durch ein Überlagerungsstrahlausgang aus dem Interferometer aus.

Die Messvorrichtung weist ferner einen optischen Detektor auf, welcher an dem Überlagerungsstrahlausgang des Interferometers angeordnet ist, derart, dass der zweite Teilstrahl mit dem überlagerten Reflektionsstrahl auf den Detektor trifft.

Eine Signalverarbeitungseinheit der Messvorrichtung ist mit dem Detektor verbunden und misst die Messsignale des Detektors. Die Messung kann in einer Aufzeichnung und/oder Auswertung bzw. Verarbeitung der Messsignale bestehen.

Bei typischen Messvorrichtungen der oben beschriebenen Art ist die Lichtquelle als Laser ausgebildet, welcher einen im Wesentlichen monochromatischen Lichtstrahl erzeugt. Durch die Überlagerung des zweiten Teilstrahls und des Reflektionsstrahls entsteht auf dem optischen Detektor ein Interferenzsignal, aus welchem beispielsweise durch Demodulation die Phasendifferenz der beiden überlagerten Strahlen ermittelt werden kann, welche wiederum eine Bestimmung der Verschiebung des Objektes im Bereich des Messpunktes ermöglicht.

Weiterhin kann durch die Demodulation der zeitlichen Ableitung der Phasendifferenz die momentane Geschwindigkeit der Bewegung des Messpunktes des Objektes bestimmt werden.

Die Genauigkeit, mit der die oben beschriebenen Messungen durchführbar sind, hängt von mehreren Faktoren ab:

Wenn in einem Rasterverfahren mehrere Punkte auf einem Messobjekt nacheinander vermessen werden, so ist die Ortsauflösung wesentlich von der Größe des Messflecks, das heißt von dem Durchmesser des Messstrahls beim Auftreffen auf den Messpunkt des Messobjektes abhängig.

Sofern sehr kleine Strukturen, beispielsweise aus der Mikrotechnik vermessen werden, ist es wesentlich, dass der Messfleck maximal eine Größe besitzt, welche in etwa der Größe der Mikrostrukturen entspricht. Soll bei den Mikrostrukturen eine laterale Auflösung, beispielsweise mittels eines Rasterverfahrens erreicht werden, so ist eine weitere Verringerung der Messfleckgröße notwendig. Typische Mikrostrukturen erfordern einen Durchmesser des Messflecks, welcher kleiner als 1 $\mu$m ist.

Die Genauigkeit der Messung ist jedoch auch von der Qualität des von dem optischen Detektor gemessenen Signals abhängig. Diese wiederum hängt von der Intensität des Reflektionsstrahls und damit auch von der Intensität ab, mit der das Messobjekt durch den Messstrahl bestrahlt wird.

Insbesondere die Vermessung von Schwingungen von kleinen Strukturen aus der Mikrotechnik erfordert eine hohe Intensität des Messstrahls, um ein gutes Signal-Rausch-Verhältnis zu erhalten. In Verbindung mit der Anforderung nach einem kleinen Durchmesser des Messfleckes führt dies zu einer hohen Flächenstrahlungsdichte auf dem Messobjekt.

Aufgrund der hohen Flächenstrahlungsdichte kann die Messung mittels herkömmlichen Messvorrichtungen zur optischen Vermessung eines Objektes einen hohen Energieeintrag in das Messobjekt bewirken und dadurch zur Verfälschung der Messung und insbesondere bei Strukturen der Mikrotechnik zu einer Zerstörung des Messobjekts führen.

Der Erfindung liegt daher die Aufgabe zugrunde, eine Messvorrichtung und ein Verfahren zur optischen Vermessung eines Objektes zu schaffen, welche die Qualität der Messung verbessern, insbesondere negative Einflüsse eines Energieeintrags in das Messobjekt durch den Messstrahl verringern.

Gelöst ist diese Aufgabe durch eine Messvorrichtung mit den Merkmalen des Patentanspruchs 1, sowie durch ein Verfahren mit den Merkmalen des Patentanspruchs 18.

Vorteilhafte Ausgestaltungen der erfindungsgemäßen Messvorrichtungen finden sich in den Patentansprüchen 2 bis 17; bevorzugte Weiterbildungen des erfindungsgemäßen Verfahrens sind in den Patentansprüchen 19 bis 27 niedergelegt.

Die Erfindung unterscheidet sich vom bisherigen Stand der Technik also grundlegend dadurch, dass das Interferometer der Messvorrichtung einen Strahlschalteingang aufweist und das Interferometer derart ausgeführt ist, dass nur bei einem am Strahlschalteingang anliegenden Schaltsignal ein Lichtstrahl aus dem Messstrahlausgang im Wesentlichen in dem vorgegebenen Winkel austritt.

Wesentlich ist, dass wenn kein Schaltsignal am Strahlschalteingang des Interferometers anliegt, kein Lichtstrahl aus dem Messstrahlausgang im Wesentlichen in dem vorgegebenen Winkel austritt, das heißt der momentan zu vermessende Messpunkt auf dem Messobjekt nicht durch den Messstrahl beleuchtet wird. Das Interferometer kann beispielsweise derart ausgeführt sein, dass wenn kein Schaltsignal am Strahlschalteingang des Interferometers anliegt, kein Lichtstrahl aus dem Messstrahlausgang austritt oder beispielsweise derart, dass zwar ein Lichtstrahl aus dem Messstrahlausgang austritt, aber in einem anderen als dem vorgegebenen Winkel, so dass der Messpunkt auf dem Messobjekt nicht durch den Messstrahl beleuchtet wird.

Die Signalverarbeitungseinheit der erfindungsgemäßen Messvorrichtung weist einen Strahlschaltausgang auf, welcher mit dem Strahlschalteingang des Interferometers verbunden ist. Während der Messung von Messsignalen durch die Signalverarbeitungseinheit gibt diese ein Schaltsignal an den Strahlschalteingang des Interferometers, so dass ein Lichtstrahl aus dem Messstrahlausgang im Wesentlichen in dem vorgegebenen Winkel austritt.

Nach abgeschlossener Messung gibt die Signalverarbeitungseinheit kein Schaltsignal mehr an den Strahlschalteingang des Interferometers, so dass kein Lichtstrahl aus dem Messstrahlausgang im Wesentlichen in dem vorgegebenen Winkel austritt und der Messpunkt auf dem Objekt nicht mehr beleuchtet wird.

Hierdurch tritt eine wesentliche Reduktion des Energieeintrags in das zu vermessende Objekt im Bereich des Messpunktes auf. Denn dadurch, dass nach abgeschlossener Messung der Messpunkt nicht mehr beleuchtet wird, findet insbesondere keine Erwärmung des Messobjektes im Bereich des Messpunktes mehr statt und Verfälschungen des Messsignals durch solch eine Erwärmung oder eine Zerstörung des Messobjektes können vermieden werden.

Dies ermöglicht erstmals die Verwendung von Messstrahlen mit Durchmessern, welche einen Messfleck auf dem Messobjekt mit einem Durchmesser kleiner 1 μm erzeugen bei gleichzeitig hoher Intensität des Messstrahls. Dadurch kann eine hohe Messgenauigkeit bei der Messung erreicht werden. Ebenso wird auch bei Verwendung von Messflecken mit größeren Durchmessern eine Erhöhung der Lichtintensität des Messstrahls ermöglicht, ohne dass die Messung durch einen Energieertrag in das Messobjekt verfälscht wird, so dass ebenfalls eine Erhöhung der Messgenauigkeit erreicht wird.

Bei der Vermessung von Schwingungen hängt die minimale Schwingungsfrequenz, welche gemessen werden kann, von der Zeitdauer der Messung ab. Je länger die Messung andauert, umso kleinere minimale Frequenzen können durch den Messvorgang ermittelt werden.

In einem besonderen Ausführungsbeispiel ist die Signalverarbeitungseinheit daher derart ausgeführt, dass sie mindestens während einer Zeitspanne $t_{min}$ die Messsignale des Detektors misst. $t_{min}$ entspricht dabei dem Inversen einer vorgegebenen minimalen Frequenz $f_{min}$, das heißt der minimalen Frequenz, welche mittels der Messung noch aufgelöst werden soll.

Um eine Verfälschung der Messung durch einen zu hohen Energieeintrag in das Messobjekt bzw. eine Zerstörung des Messobjekts zu vermeiden ist es sinnvoll, wenn eine maximale Zeitdauer für einen Messvorgang vorgegeben wird. In einer weiteren vorteilhaften Ausführungsform ist die Signalverarbeitungseinheit daher derart ausgeführt, dass sie höchstens während einer Zeitspanne mit einer vorgegebenen maximalen Zeitdauer $t_{max}$ die Messsignale des Detektors misst.

Die maximale Zeitdauer $t_{max}$ kann hierbei aufgrund von Erfahrungswerten für das zu vermessende Objekt vorgegeben werden.

Besonders vorteilhaft ist es jedoch, die maximale Zeitdauer $t_{max}$ aus Formel A zu berechnen:

$$t_{max} = \frac{c\,\rho\,d_M^3\,(l-d_M)}{\eta\,d_M^2}\ln\left(\frac{a\,P_M\,(l-d_M)-T\,\eta\,d_M^2}{a\,P_M\,(l-d_M)}\right) \quad \text{(Formel A)}$$

Hierfür werden Werte für eine maximale Temperaturdifferenz T in [°C], eine Wärmekapazität c in [J/kg/K], eine Dichte $\rho$ in [kg/m³], einen Messtrahldurchmesser $d_M$ in [m], eine Länge $l$ in [m], eine Wärmeleitfähigkeit $\eta$ in [W/m/K], einen Absorptionskoeffizienten a (einheitenlos) und eine Messstrahlleistung $P_M$ in [W] des am Messstrahlausgang des Interferometers austretenden Messstrahles vorgegeben.

Sind die Materialparamter $\rho$, c, a und $\eta$ des Messobjekts bekannt, so können sie direkt in obige Formel eingesetzt werden. In typischen Fällen, insbesondere bei der Vermessung von Strukturen aus der Mikrotechnik bestehen Messobjekte im Wesentlichen aus Silizium, so dass vorteilhafterweise für die Materialparameter die Werte für Silizium gewählt werden, wobei $\rho$ in etwa 2,33 kg/m³, c in etwa 670 J/kg/K, a in etwa 1 und $\eta$ in etwa 150 W/m/K beträgt.

Selbstverständlich liegt es im Rahmen der Erfindung, bei Messobjekten aus anderen Materialien entsprechende bekannte Materialparameter einzusetzen.

Der Messstrahldurchmesser $d_M$ entspricht vorteilhafterweise dem Durchmesser des am Messstrahlausgang des Interferometers austretenden Messstrahls.

In einer weiteren vorteilhaften Ausführungsform weist das Interferometer eine Fokussiereinrichtung auf, welche eine Fokussierung des Messstrahls erlaubt, so dass eine Verringerung des Durchmessers des Messpunktes auf dem Objekt erreicht werden kann. Hierzu ist die Fokussiereinrichtung.derart im Strahlengang des Interferometers angeordnet, dass der am Messstrahlausgang austretende Messstrahl fokussiert wird, insbesondere derart, dass der Messpunkt auf dem Objekt in etwa im Brennpunkt der Fokussiereinrichtung liegt, so dass ein möglichst kleiner Messfleck erzeugt wird.

Vorteilhafterweise ist die Lichtquelle des Interferometers derart ausgeführt, dass sie einen im Wesentlichen monochromatischen Lichtstrahl mit einer Wellenlänge λ erzeugt. In Kombination mit der vorhergehend beschriebenen Fokussiereinrichtung lässt sich der Messstrahldurchmesser $d_M$ am Messpunkt, das heißt der Messfleckdurchmesser durch die Formel B

$$d_M = \frac{1.22\,\lambda}{NA} \quad \text{(Formel B)}$$

berechnen, wobei NA im Wesentlichen der numerischen Apertur der Fokussiereinrichtung entspricht.

In einer weiteren vorteilhaften Ausgestaltung ist die Lichtquelle derart ausgeführt, dass sie Licht mit einer kurzen Kohärenzlänge erzeugt. Ein von der Lichtquelle ausgesandter Lichtstrahl weist dann keine eindeutige Wellenlänge auf, vielmehr setzt er sich aus Teillichtstrahlen mit unterschiedlichen Wellenlängen zusammen. Eine Berechnung des Messfleckdurchmessers nach Formel B ist dennoch möglich, indem für λ eine gemittelte Wellenlänge des erzeugten Lichtstrahls eingesetzt wird.

Die vorgegebene Länge / beträgt vorzugsweise mindestens $d_M$, insbesondere das zwanzigfache von $d_M$. Dies ist insbesondere bei der Vermessung von Mikrostrukturen vorteilhaft, da hier als Richtwert die Ausdehnung einer zu vermessenden Struktur in einer Dimension in etwa mit dem zwanzigfachen des Durchmessers des Messflecks abgeschätzt werden kann.

Die Variable T in obiger Formel gibt die maximale Temperaturdifferenz an, welche zwischen der Mikrostruktur und der Umgebung maximal erreicht werden soll. Je höher die maximale Temperaturdifferenz, desto größer ist auch die sich ergebende zulässige maximale Messdauer $t_{max}$.

Um eine Verfälschung der Messergebnisse zu vermeiden, ist es grundsätzlich vorteilhaft, die maximale Temperaturdifferenz T nicht größer als 500 °C zu wählen. Insbesondere bei der Vermessung von Mikrostrukturen a.us Silizium zeigen Erfahrungswerte jedoch, dass eine Temperaturdifferenz von 100 °C nicht überschritten werden sollte, um eine Zerstörung einzelner Elemente der Mikrostrukturen zu vermeiden.

In einer weiteren vorteilhaften Ausführungsform ist die Signalverarbeitungseinheit derart ausgeführt, dass mindestens zwei Messvorgänge hintereinander durchgeführt werden können, wobei jeweils eine Aufnahme von Messsignalen stattfindet. Zwischen den beiden Messvorgängen wird eine Pause von mindestens einer vorgegebenen Zeitspanne $t_P$ durchgeführt, in der keine Aufnahme von Messsignalen stattfindet und folglich auch kein Schaltsignal von der Signalverarbeitungseinheit an den Strahlschalteingang des Interferometers abgegeben wird. Während der Pause zwischen den beiden Messvorgängen wird der Messpunkt auf dem Objekt somit nicht mit einer Bestrahlung durch den Messstrahl beaufschlagt.

Dies ermöglicht die Durchführung von mehreren Messungen hintereinander, beispielsweise um durch Mittlung über mehrere Messungen die Genauigkeit des Messergebnisses zu erhöhen.

Während der Pause zwischen den beiden Messvorgängen kühlt das zu vermessende Objekt im Bereich des Messpunktes ab, so dass die Erwärmung des Messobjekts verringert wird.

Erfahrungsgemäß ist es vorteilhaft, wenn die Zeitspanne zwischen den beiden Messvorgängen $t_P$ derart bemessen ist, dass die Temperatur in etwa auf einen Anteil 1/e (mit der Eulerschen Zahl e) der Temperatur am Ende des Messvorgangs absinkt. Die Zeitdauer, die für ein Absinken auf den Anteil 1/e notwendig ist, lässt sich über Formel C mit

$$t_P = \frac{c\,\rho\,d_M^3\,(l - d_M)}{\eta\,d_M^3} \quad \text{(Formel C)}$$

abschätzen, mit den zu Formel A beschriebenen Parametern. Es ist somit vorteilhaft, wenn die Zeitspanne $t_p$ zwischen den Messvorgängen mindestens dem mittels Formel C berechneten Wert entspricht.

Typischerweise liegen bei der erfindungsgemäßen Messvorrichtung nach Abgabe eines Schaltsignals an den Strahlschalteingang des Interferometers nicht unmittelbar Messsignale am Messsignalausgang des Detektors an, welche von der Signalverarbeitungseinheit gemessen werden können. Dies ist darin begründet, dass zum einen aufgrund interner Schaltvorgänge im Interferometer eine gewisse Zeit benötigt wird, bis nach dem Anliegen eines Schaltsignals am Strahlschalteingang ein Messstrahl aus dem Interferometer austritt. Darüber hinaus vergeht eine gewisse Zeitspanne, bis die überlagerten Lichtstrahlen auf dem optischen Detektor auftreffen und bis der optische Detektor die Messinformation als Messsignal an seinem Ausgang abgibt.

Aus diesen Gründen ist es vorteilhaft, wenn die Signalverarbeitungseinheit vor der Messdatenaufnahme für eine Vorlaufzeitspanne $t_{vor}$ ein Schaltsignal an den Strahlschalteingang des Interferometers abgibt. Die Vorlaufzeitspanne $t_{vor}$ sollte derart bemessen sein, dass sie die oben genannten Laufzeiten, das heißt sowohl die Signallaufzeiten als auch die Verzögerung durch die optischen Komponenten berücksichtigt.

Auf diese Weise ist gewährleistet, dass bei Beginn der Messdatenaufnahme durch die Signalverarbeitungseinheit unmittelbar auswertbare Messsignale von dem Detektor ausgelesen werden können.

Selbstverständlich liegt es auch im Rahmen der Erfindung, direkt mit der Abgabe des Schaltsignals an den Strahlschalteingang des Interferometers mit der Messdatenaufnahme zu beginnen. Die Messdaten, welche während der oben genannten Vorlaufzeit aufgenommen werden, sind in diesem Fall jedoch von der Auswertung auszuschließen, da sie keine sinnvolle Auswertung ermöglichen.

In einer weiteren vorteilhaften Ausführungsform ist die erfindungsgemäße Messvorrichtung derart ausgeführt, dass die Lichtquelle des Interferometers eine schaltbare Lichtquelle ist, das heißt, dass sie abhängig von einem Schaltsignal einen Lichtstrahl erzeugt. Die Lichtquelle weist hierzu einen Schalteingang auf, welcher mit dem Strahlschalteingang des Interferometers und somit mit der Signalverarbeitungseinheit verbunden ist.

Besonders vorteilhaft ist es jedoch, dass das Interferometer ein optisches Schaltelement umfasst, welches mit dem Strahlschalteingang des Interferometers verbunden und derart in dem Strahlengang des Interferometers angeordnet ist, dass bei anliegendem Schaltsignal ein Messstrahl aus dem Messstrahlausgang des Interferometers im Wesentlichen in dem vorgegebenen Winkel austritt und entsprechend bei nicht anliegendem Schaltsignal kein Messstrahl aus dem Messstrahlausgang des Interferometers im Wesentlichen in dem vorgegebenen Winkel austritt.

Hierbei sind mehrere Ausführungsmöglichkeiten des optischen Schaltelementes und auch verschiedene Positionen denkbar, an denen das Schaltelement angeordnet werden kann:

So liegt es im Rahmen der Erfindung, dass das optische Schaltelement auch außerhalb einer apparativen Einheit der Messvorrichtung, z.B. unmittelbar an dem Messobjekt angeordnet ist und mittels einer flexiblen Leitung oder einer andersartigen Signalübertragung mit dem Strahlschalteingang des Interferometers verbunden ist. Aufgrund des funktionellen Zusammenhangs mit dem Interferometer ist in diesem Fall das optische Schaltelement als Messstrahlausgang des Interferometers anzusehen, da zwar unabhängig von dem Schaltsignal ein Messstrahl zwischen Interferometer und optischem Schaltelement vorhanden ist, jedoch nur bei an dem Strahlschalteingang des Interferometers anliegenden Schaltsignal der Messstrahl aus dem optischen Schaltelement (und damit aus dem Messstrahlausgang des Interferometers) im Wesentlichen in dem vorgegebenen Winkel austritt und den Messpunkt beleuchtet.

Besonders vorteilhaft ist es jedoch, das optische Schaltelement innerhalb des Interferometers derart im Strahlengang des Interferometers anzuordnen, dass abhängig vom Zustand des optischen Schaltelementes, das heißt abhängig vom Anliegen eines Schaltsignals am Strahlschalteingang des Interferometers ein Messstrahl aus dem Interferometer austritt.

In einer bevorzugten Ausführungsform ist das optische Schaltelement als an sich bekannte Braggzelle in Verbindung mit einer Strahlfalle ausgeführt. Die Braggzelle ist mit dem Strahlschalteingang des Interferometers verbunden und Braggzelle und Strahlfalle sind derart in dem Strahlengang des Interferometers angeordnet, dass bei anliegendem Schaltsignal ein Messstrahl aus dem Messstrahlausgang des Interferometers austritt.

Liegt hingegen kein Schaltsignal an dem Strahlschalteingang des Interferometers an, so wird der durch die Braggzelle hindruchtretende Lichtstrahl durch die Braggzelle in die Strahlfalle abgelenkt, so dass kein Messstrahl aus dem Messstrahlausgang des Interferometers austritt.

In einer weiteren vorteilhaften Ausführungsform ist das Schaltelement als mechanischer Shutter, beispielsweise in Form einer an sich bekannten mechanischen Blende ausgeführt. Ebenso liegt es im Rahmen der Erfindung, das optische Schaltelement als elektro-optischen Shutter auszuführen, insbesondere als an sich bekannten LC-Rotator mit Polarisator. Bei dieser Ausführungsform ist der LC-Rotator mit Polarisator derart ausgeführt, dass nur bei einem an dem LC-Rotator anliegenden Schaltsignal die Polarisierung des LC-Rotators mit dem Polarisator korrespondiert, das heißt, dass Lichtstrahlen durch LC-Rotator und Polarisator hindurchtreten können. Liegt hingegen kein Schaltsignal an dem LC-Rotator an, so wirkt der LC-Rotator in Kombination mit dem Polarisator als Blende, das heißt es treten keine Lichtstrahlen hindurch.

In einer weiteren bevorzugten Ausführungsform ist die Messvorrichtung als Laser-Doppler-Vibrometer ausgeführt. Hierzu ist die Lichtquelle als Laser ausgebildet und die Signalverarbeitungseinheit ermittelt die Phasendifferenz der beiden auf den Detektor auftreffenden überlagernden Strahlen mittels eines an sich bekannten Displacement-Decoders.

Weiterhin ist es vorteilhaft, das Interferometer derart auszubilden, dass ein zeitlich konstanter Frequenzunterschied zwischen dem zweiten und dem ersten Teilstrahl erzeugt wird. Hierdurch kann zusätzlich die Richtung der Bewegung des Messpunktes des Messobjekts bestimmt werden. Die Messvorrichtung entspricht in dem Grundaufbau dann einem heterodynen Laser-Doppler-Vibrometer.

In einer weiteren vorteilhaften Ausführungsform ist die Messvorrichtung derart ausgeführt, dass hintereinander mehrere Messpunkte auf dem Objekt vermessen werden können. Durch solch ein scannendes Messverfahren kann das Messobjekt mit einem Messpunktraster überzogen werden, wobei zeitlich aufeinanderfolgend für jeden Messpunkt eine Messung vorgenommen wird. Dies kann beispielsweise dadurch realisiert werden, dass die Messvorrichtung einen X-Y-Tisch zur Aufnahme des zu vermessenden Objektes aufweist, dessen Bewegungsebene im Wesentlichen senkrecht zu dem am Messstrahlausgang des Interferometers austretenden Messstrahl steht. Der X-Y-Tisch ist mit der Signalverarbeitungseinheit verbunden, welche für jeden Messvorgang die Positionierung des Messobjektes relativ zum Messstrahl steuert.

In einer weiteren bevorzugten Ausführungsform ist die Messvorrichtung als scannendes konfokales Laser-Doppler-Vibrometer ausgeführt. Der Grundaufbau solch eines Vibrometers ist aus

Christian Rembe, Alexander Dräbenstedt, "The Laser-Scanning Confocal Vibrometer Microscope", Optical Measurement Systems for Industrial Inspection IV, SPIE Vol. 5856, 13-17 Juni, Munich, Germany, pp. 698-709

bekannt. Die Messvorrichtung weist hierzu wie oben ausgeführt eine Fokussiereinrichtung auf, welche eine Fokussierung des Messstrahls auf den Messpunkt des Messobjekts ermöglicht. Durch die konfokale Ausführung werden Lichtstrahlen, welche von dem Messobjekt reflektiert werden, jedoch nicht in der Fokusebene der Fokusiereinrichtung liegen, ausgeblendet. Im Ergebnis wird eine deutliche Reduzierung des Streulichts erreicht, welche die effektive Auflösung und damit die Qualität der Messsignale der erfindungsgemäßen Messvorrichtung erhöht.

Ein Ausführungsbeispiel wird im Folgenden anhand der beigefügten Zeichnung näher erläutert. Dargestellt ist in

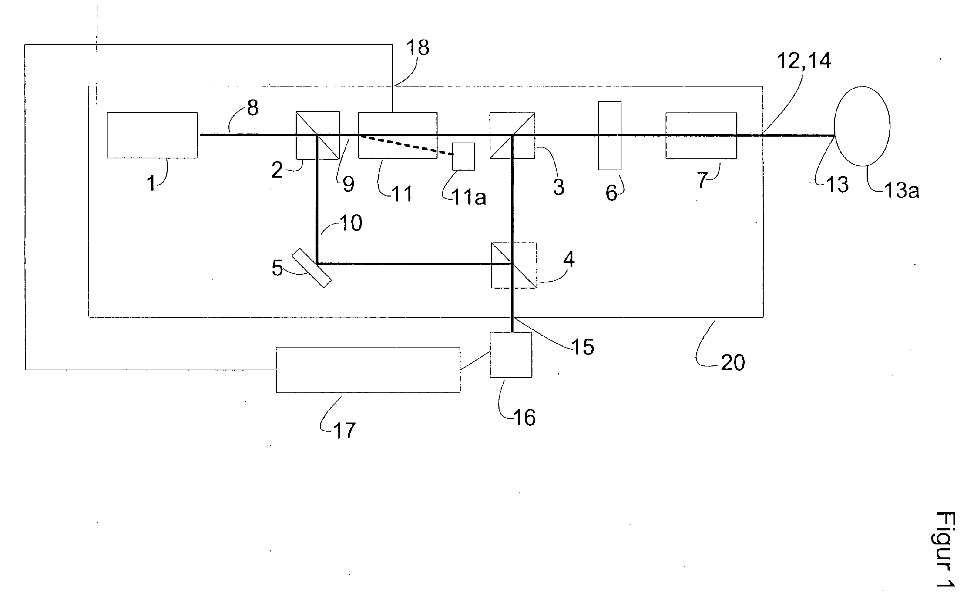

Figur 1     ein Ausführungsbeispiel der erfindungsgemäßen Messvorrichtung, bei der das optische Schaltelement als Braggzelle in Kombination mit einer Strahlfalle ausgeführt ist.

Das in Figur 1 dargestellte Ausführungsbeispiel ist als heterodynes Laser-Doppler-Vibrometer ausgeführt.

Das Interferometer 20 der Messvorrichtung umfasst eine als Laser 1 ausgeführte Lichtquelle, einen ersten Polarisationsstrahlteiler 2, einen zweiten Polarisationsstrahlteiler 3, einen Strahlteiler 4, einen Umlenkspiegel 5, ein $\lambda$ - Viertel-Plättchen 6 und eine als Mikroskop-Objektiv 7 ausgeführte Fokussiereinrichtung. Der Laser 1 erzeugt einen monochromatischen Lichtstrahl 8 der Wellenlänge $\lambda$, welcher durch den ersten Strahlteiler 2 in einen ersten Teilstrahl 9 und einen zweiten Teilstrahl 10 aufgeteilt wird. Der erste Teilstrahl 9 durchläuft eine Braggzelle 11, den zweiten Polarisationsstrahlteiler 3, das $\lambda$-Viertel-Plättchen 6 und das Mikroskopobjektiv 7. Danach tritt der erste Teilstrahl 9 als Messstrahl aus dem Messstrahlausgang 12 des Interferometers aus und trifft auf einen Messpunkt 13 des zu vermessenden Objekts 13a.

Der von dem Objekt reflektierte Messstrahl (d.h. der Reflektionsstrahl) tritt durch den Reflektionsstrahleingang 14, welcher in diesem Ausführungsbeispiel mit dem Messstrahlausgang 12 identisch ist, wieder in das Interferometer 20 ein, durchläuft das Mikroskopobjektiv 7, das $\lambda$-Viertel-Plättchen 6, wird von dem zweiten Polarisationsstrahlteiler 3 auf den Strahlteiler 4 abgelenkt und tritt nach Durchlaufen dieses Strahlteilers am Überlagerungsstrahlausgang 15 des Interferometers 20 aus.

Der zweite Teilstrahl 10 wird durch den Umlenkspiegel 5 ebenfalls auf den Strahlteiler 4 gelenkt und überlagert sich im Strahlteiler 4 mit dem Reflektionsstrahl, so dass der zweite Teilstrahl 10 mit dem überlagerten Reflektionsstrahl am Überlagerungsstrahlausgang 15 aus dem Interferometer austritt.

Das Mikroskopobjektiv 7 ist derart relativ zu dem Messpunkt 13 des Objekts 13a angeordnet, dass der Messstrahl auf den Messpunkt 13 fokussiert wird.

Die Messvorrichtung umfasst ferner einen Fotodetektor 16, welcher derart am Überlagerungsstrahlausgang 15 des Interferometers angeordnet ist, dass der zweite Teilstrahl mit dem überlagerten Reflektionsstrahl auf eine Messfläche des Fotodetektors 16 auftrifft.

In diesem Ausführungsbeispiel ist der Fotodetektor derart ausgeführt, dass er abhängig von der Intensität der auftreffenden überlagerten Strahlen ein Messsignal abgibt.

Die Messvorrichtung weist ferner eine Signalverarbeitungseinheit 17 auf, welche mit dem Fotodetektor 16 verbunden ist, zur Messung der Messsignale des Fotodetektors.

Durch die Braggzelle 11 findet eine Frequenzverschiebung des ersten Teilstrahls 9 bei Durchlaufen der Braggzelle 11 gegenüber dem zweiten Teilstrahl 10 statt. Hierdurch wird das Doppler-Interferometer zu einem heterodynen Doppler-Interferometer, so dass die Signalverarbeitungseinheit 17 durch Auswerten der Messsignale des Fotodetektors 16 auch die Richtung der Bewegung des Messpunktes 13 ermitteln kann.

Wesentlich ist nun, dass das Interferometer 20 einen Strahlschalteingang 18 aufweist, welcher mit der Signalverarbeitungseinheit 17 einerseits und mit der Braggzelle 11 andererseits verbunden ist.

Die Braggzelle 11 ist derart ausgeführt, dass bei einem von der Signalverarbeitungseinheit abgegebenem Schaltsignal, welches folglich an der Braggzelle 11 anliegt, der erste Teilstrahl 9 die Braggzelle 11 in dem als durchgezogene Linie dargestellten Weg durchläuft. Liegt hingegen kein Strahlschaltsignal an dem Strahlschalteingang 18 des Interferometers und damit an der Braggzelle 11 an, so wird der erste Teilstrahl 9 gemäß der gestrichelt dargestellten Linie abgelenkt, so dass der erste Teilstrahl 9 in einer Strahlfalle 11a endet. In letzterem Fall tritt somit kein Messstrahl aus dem Messstrahlausgang 12 des Interferometers aus.

Die Signalverarbeitungseinheit ist derart ausgeführt, dass sie während der Messung ein Schaltsignal an den Strahlschalteingang 18 des Interferometers 20 abgibt und nach abgeschlossener Messung kein Schaltsignal an den Strahlschalteingang des Interferometers abgibt.

Bevor ein Messvorgang mittels der Messvorrichtung ausgeführt wird, werden Parameter in die Signalverarbeitungseinheit 17 eingegeben, welche eine Ermittlung der minimalen Messzeit $t_{min}$ und der maximalen Messzeit $t_{max}$ ermöglichen. Die minimale Messzeit $t_{min}$ ergibt sich aus dem Inversen einer vorgegebenen minimal aufzulösenden Frequenz $f_{min}$.

Die maximale Messzeit $t_{max}$ ergibt sich nach der oben angegebenen Formel A, wobei der Messstrahldurchmesser $d_M$ durch die ebenfalls oben angegebene Formel B bestimmt wird, mit der Wellenlänge λ des von dem Laser 1 erzeugten Lichtstrahls 8 und der numerischen Apertur *NA* des Mikroskopobjektivs 7.

Abhängig von dem zu vermessenden Objekt werden die Materialparameter p, c, a und η vorgegeben. Ist das zu vermessende Objekt beispielsweise im Wesentlichen aus Silizium hergestellt, so werden die oben angegebenen Materialparameter für Silizium vorgegeben.

Die Länge / wird als das zwanzigfache des Messstrahldurchmessers $d_M$ vorgegeben, die maximale Temperaturdifferenz T kann wahlweise vom Benutzer eingestellt werden oder wird mit 100 °C vorgegeben.

Aus diesen Berechnungen ergeben sich eine minimale und eine maximale Zeitspanne für den Messvorgang. Sofern die errechnete maximale Messdauer $t_{max}$ größer als die minimale Messdauer $t_{min}$ ist, wird eine Messung mit einer Zeitdauer eines ganzzahligen Vielfachen von $t_{min}$, welches kleiner oder gleich $t_{max}$ ist, durchgeführt. Für ein gegebenes $t_{min}$ wird somit die größtmögliche ganze Zahl $n_{max}$ ermittelt, unter der Bedingung $n_{max} \cdot t_{min} \leq t_{max}$. Eine Messung kann dann mit der Messdauer $n \cdot t_{min}$ durchgeführt werden, wobei der Wert ganzzahlige Faktor n zwischen 1 und $n_{max}$ gewählt werden kann.

Ist jedoch die maximale Messdauer $t_{max}$ kleiner als die minimale Messdauer $t_{min}$, so wird von der Signalverarbeitungseinheit 17 über eine (nicht dargestellte) Ausgabeeinheit eine Warnmeldung an den Benutzer ausgegeben.

Der Benutzer kann nun die vorgegebenen Werte korrigieren oder einen Messmodus wählen, indem mehrere Messvorgänge mit der Zeitdauer $t_{max}$ hintereinander ausgeführt werden, wobei zwischen den Messvorgängen jeweils eine Pause mit der Zeitspanne $t_{max}$ durchgeführt wird, in der die Signalverarbeitungseinheit kein Schaltsignal des Interferometers 20 abgibt, so dass der Messpunkt 13 des Objektes während der Pause nicht mit einem Messstrahl beaufschlagt wird.

Hierbei werden so viele Messvorgänge mit jeweils einer Messdauer $t_{max}$ durchgeführt, dass die aufsummierte Zeitdauer der Messvorgänge größer oder gleich der minimalen Messdauer $t_{min}$ ist.

Durch diese erfindungsgemäße Vorrichtung ist es erstmals möglich, Objekte mit einer hohen Fokussierung des Messstrahls bei gleichzeitiger hoher Intensität des Messstrahls zu vermessen, ohne dass das Messobjekt durch einen hohen Energieeintrag beeinträchtigt oder zerstört wird.

Dies ermöglicht eine neue Dimension der Messgenauigkeit, insbesondere bei Objekten aus der Mikrotechnik, denn etwaige zu vermessende Resonanzfrequenzen steigen mit kleiner werdenden Bauteilen. Zur Vermessung von Objekten der Mikrotechnik sind daher hohe Messbandbreiten erforderlich, welche erhöhte Anforderungen an die Messqualität, insbesondere an das Signal-Rauschverhältnis stellen. Mit der vorliegenden Erfindung kann durch eine bisher nicht mögliche Erhöhung der Intensität des Messstrahls eine deutliche Verbesserung der Qualität des Messsignals erreicht werden, so dass Messungen mit einer höheren Messbandbreit möglich sind.

**Patentansprüche**

1. Messvorrichtung zur optischen Vermessung eines Objektes (13a), insbesondere zur Vermessung einer Bewegung des Objektes (13a), umfassend
   ein Interferometer (20) mit einem Messstrahlausgang (12), einem Reflektionsstrahleingang (14), einem Überlagerungsstrahlausgang (15) und einer Lichtquelle (1) zur Erzeugung eines Lichtstrahls (8),
   wobei das Interferometer (20) derart ausgebildet ist, dass ein von der Lichtquelle (1) erzeugter Lichtstrahl (8) in mindestens zwei Teilstrahlen (9, 10) aufgeteilt wird, wobei ein erster Teilstrahl (9) aus dem Messstrahlausgang (12) im wesentlichen in einem vorgegebenen Winkel austritt und ein zweiter Teilstrahl (10) mit einem durch den Reflektionsstrahleingang (14) eintretenden Reflektionsstrahl überlagert wird und dass der zweite Teilstrahl (10) mit dem überlagerten Reflektionsstrahl an dem Überlagerungsstrahlausgang (15) austritt,
   einen optischen Detektor (16), welcher derart an dem Überlagerungsstrahlausgang (15) des Interferometers (20) angeordnet ist, dass ein aus dem Überlagerungsstrahlausgang (15) austretender Lichtstrahl auf den Detektor (16) trifft und

eine Signalverarbeitungseinheit (17), welche mit dem Detektor (16) verbunden und derart ausgeführt ist, dass sie Messsignale des Detektors (16) aufnehmen und/oder verarbeiten kann,
**dadurch gekennzeichnet,**
**dass** das Interferometer (20) einen Strahlschalteingang (18) aufweist und derart ausgeführt ist, dass nur bei einem am Strahlschalteingang (18) anliegenden Schaltsignal ein Lichtstrahl aus dem Messstrahlausgang (12) im wesentlichen in dem vorgegebenen Winkel austritt und dass die Signalverarbeitungseinheit (17) einen Strahlschaltausgang aufweist, welcher mit dem Strahlschalteingang (18) des Interferometers verbunden ist, wobei die Signalverarbeitungseinheit (17) derart ausgeführt ist, dass sie während der Messung von Messsignalen ein Schaltsignal an den Strahlschalteingang (18) des Interferometers (20) und nach abgeschlossener Messung der Messsignale kein Schaltsignal an den Strahlschalteingang (18) des Interferometers (20) abgibt.

2. Messvorrichtung nach Anspruch 1,
   **dadurch gekennzeichnet,**
   **dass** die Signalverarbeitungseinheit (17) derart ausgeführt ist, dass sie mindestens während einer Zeitspanne $t_{min}$ Messignale des Detektors (16) misst, wobei $t_{min}$ dem Inversen einer vorgegebenen minimalen Frequenz $f_{min}$ entspricht.

3. Messvorrichtung nach einem der vorangegangenen Ansprüche,
   **dadurch gekennzeichnet,**
   **dass** die Signalverarbeitungseinheit (17) derart ausgeführt ist, dass sie höchstens während einer Zeitspanne mit einer vorgegebenen maximalen Zeitdauer $t_{max}$ Messsignale des Detektors (16) misst.

4. Messvorrichtung nach Anspruch 3,
   **dadurch gekennzeichnet,**
   **dass** sich $t_{max}$ aus der Formel

$$t_{max} = \frac{c\,\rho\,d_M^3\,(l-d_M)}{\eta\,d_M^2}\ln\left(\frac{a\,P_M\,(l-d_M)-T\,\eta\,d_M^2}{a\,P_M\,(l-d_M)}\right)$$

berechnet, mit vorgegebenen Werten für eine maximale Temperaturdifferenz T, eine Wärmekapazität c, eine Dichte ρ, einen Messstrahldurchmesser $d_M$, eine Länge $l$, eine Wärmeleitfähigkeit η, einen Absorptionskoeffizienten $a$ und eine Messstrahlleistung $P_M$ des am Messstrahlausgang des Interferometers austretenden Messstrahles.

5. Messvorrichtung nach Anspruch 4,
   **dadurch gekennzeichnet,**
   **dass** für die Materialparameter ρ, c, $a$ und η Werte gewählt werden, die im wesentlichen den Materialparametern des vermessenen Objekts entsprechen, insbesondere, dass für die Materialparameter ρ, c, $a$ und η Werte für Silizium gewählt werden, wobei ρ in etwa 2,33 kg/m³, c in etwa 670 J/kg/K, $a$ in etwa 1 und η in etwa 150 W/m/K beträgt.

6. Messvorrichtung nach Anspruch 4,
   **dadurch gekennzeichnet,**
   **dass** der Messstrahldurchmesser $d_M$ dem Durchmesser des am Messstrahlausgang (12) des Interferometers (20) austretenden Messstrahls entspricht.

7. Messvorrichtung nach Anspruch 4,
   **dadurch gekennzeichnet,**
   **dass** das Interferometer (20) eine Fokussiereinrichtung (7) umfasst, welche derart im Strahlengang des Interferometers (20) angeordnet ist, dass der am Messstrahlausgang (12) austretende Messstrahl fokussiert wird,
   **dass** die Lichtquelle (1) des Interferometers (20) derart ausgeführt ist, dass sie einen im wesentlichen monochromatischen Lichtstrahl (8) mit einer Wellenlänge λ erzeugt oder einen Lichtstrahl mit Teillichtstrahlen mehrerer Wellenlängen, wobei in etwa λ der Mittelwert der Wellenlängen der Teillichtstrahlen ist und
   **dass** der Messstrahldurchmesser $d_M$ durch die Formel

$$d_M = \frac{1.22\,\lambda}{NA}$$

vorgegeben ist, wobei NA im Wesentlichen der numerischen Apertur der Fokussiereinrichtung (7) entspricht.

8. Messvorrichtung nach einem der Ansprüche 4 bis 7,
   **dadurch gekennzeichnet,**
   **dass** die vorgegebene Länge $l$ mindestens $d_M$ beträgt, insbesondere
   **dass** $l$ in etwa das zwanzigfache von $d_M$ beträgt.

9. Messvorrichtung nach einem der Ansprüche 4 bis 8,
   **dadurch gekennzeichnet,**
   **dass** die vorgegebene maximale Temperaturdifferenz T maximal 500°C beträgt, insbesondere dass T mit etwa 100°C vorgegeben ist.

10. Messvorrichtung nach einem der Ansprüche 3 bis 9,
    **dadurch gekennzeichnet,**
    **dass** die Signalverarbeitungseinheit (17) derart ausgeführt ist, dass sie mindestens zwei Messvorgänge mit jeweils einer Aufnahme von Messsignalen durchführt, wobei zwischen den beiden Messvorgängen eine Pause von mindestens einer vorgegebenen Zeitspanne $t_P$ durchgeführt wird, in der keine Aufnahme von Messsignalen stattfindet und kein Schaltsignal an den Strahlschalteingang (18) des Interferometers (20) abgegeben wird, insbesondere, dass $t_p$ mindestens

$$t_P \geq \frac{c\,\rho\,d_M^3\,(l - d_M)}{\eta\,d_M^3}$$

beträgt.

11. Messvorrichtung nach einem der vorangegangenen Ansprüche,
    **dadurch gekennzeichnet,**
    **dass** die Signalverarbeitungseinheit (17) derart ausgeführt ist, dass vor der Messdatenaufnahme für eine Vorlaufzeitspanne $t_{vor}$ ein Schaltsignal an den Strahlschalteingang (18) des Interferometers (20) abgegeben wird.

12. Messvorrichtung nach einem der vorangegangenen Ansprüche,
    **dadurch gekennzeichnet,**
    **dass** das Interferometer (20) ein optisches Schaltelement umfasst, welches mit dem Strahlschalteingang (18) des Interferometers (20) verbunden und derart in dem Strahlengang des Interferometers angeordnet ist, dass bei anliegendem Schaltsignal ein Messstrahl aus dem Messstrahlausgang (12) des Interferometers (20) im wesentlichen in dem vorgegebenen Winkel austritt und bei nicht anliegendem Schaltsignal kein Messstrahl aus dem Messstrahlausgang (12) des Interferometers (20) im wesentlichen in dem vorgegebenen Winkel austritt.

13. Messvorrichtung nach Anspruch 12,
    **dadurch gekennzeichnet,**
    **dass** das optische Schaltelement als Braggzelle (11) oder als mechanischer Shutter ausgeführt ist.

14. Messvorrichtung nach Anspruch 12,
    **dadurch gekennzeichnet,**
    **dass** das optische Schaltelement als elektro-optischer Shutter, insbesondere als LC-Rotator mit Polarisator ausgeführt ist.

15. Messvorrichtung nach einem der vorangegangenen Ansprüche,
    **dadurch gekennzeichnet,**
    **dass** die Messvorrichtung als Vibrometer, insbesondere als Laser-Doppler-Vibrometer ausgeführt ist.

**16.** Messvorrichtung nach Anspruch 15,
**dadurch gekennzeichnet,**
**dass** das Vibrometer als Heterodyn-Interferometer ausgeführt ist.

**17.** Messvorrichtung nach Anspruch 15,
**dadurch gekennzeichnet,**
**dass** die Messvorrichtung als scannendes konfokales Laser-Doppler-Vibrometer ausgeführt ist.

**18.** Verfahren zur optischen Vermessung eines Objektes (13a), insbesondere zur Messung der Bewegung des Objektes, folgende Schritte umfassend:

A Erzeugen eines Lichtstrahls und Aufteilen des Lichtstrahls in mindestens einen Messstrahl und einen Referenzstrahl,
B Bestrahlen eines Messpunktes (13) auf dem Objekt (13a) mit dem Messstrahl,
C Überlagern des vom Objekt reflektierten Messstrahls mit dem Referenzstrahl derart, dass der reflektierte Messstrahl mit dem überlagerten Referenzstrahl auf einem optischen Detektor (16) auftrifft und
D Messen der Messsignale des Detektors (16)

**dadurch gekennzeichnet,**
**dass** der Messvorgang in Schritt D mindestens während einer Zeitspanne $t_{min}$ durchgeführt wird, wobei das Objekt (13a) während dieser Zeitspanne mit dem Messstrahl beleuchtet wird und $t_{min}$ dem Inversen einer vorgegebenen minimalen Frequenz $f_{min}$ entspricht und
**dass** unmittelbar nach dem Messvorgang in Schritt D der Messpunkt (13) auf dem Objekt (13a) nicht mehr mit dem Messstrahl bestrahlt wird.

**19.** Verfahren zur optischen Vermessung eines Objektes nach Anspruch 18,
**dadurch gekennzeichnet,**
**dass** der Messvorgang in Schritt D höchstens eine Zeitspanne mit einer vorgegebenen maximalen Zeitdauer $t_{max}$ andauert.

**20.** Verfahren zur optischen Vermessung eines Objektes nach Anspruch 19,
**dadurch gekennzeichnet,**
**dass** sich $t_{max}$ aus der Formel

$$t_{\max} = \frac{c\,\rho\,d_M^3\,(l-d_S)}{\eta\,d_M^2}\ln\left(\frac{a\,P_M\,(l-d_M)-T\,\eta\,d_M^2}{a\,P_M\,(l-d_M)}\right)$$

berechnet, mit vorgegebenen Werten für eine maximale Temperaturdifferenz T, eine Wärmekapazität c, eine Dichte ρ, einen Messstrahldurchmesser $d_M$, eine Länge l, eine Wärmeleitfähigkeit η, einen Absorptionskoeffizienten a und eine Messstrahlleistung $P_M$ des am Messstrahlausgang des Interferometers austretenden Messstrahles.

**21.** Verfahren zur optischen Vermessung eines Objektes nach Anspruch 20,
**dadurch gekennzeichnet,**
**dass** für die Materialparameter ρ, c, a und η Werte gewählt werden, die im wesentlichen den Materialparametern des vermessenen Objekts (13a) entsprechen, insbesondere, dass für die Materialparameter ρ, c, a und η Werte für Silizium gewählt werden, wobei ρ in etwa 2,33 kg/m$^3$, c in etwa 670 J/kg/K, a in etwa 1 und η in etwa 150 W/m/K beträgt.

**22.** Verfahren zur optischen Vermessung eines Objektes nach einem der Ansprüche 20 oder 21,
**dadurch gekennzeichnet,**
**dass** der Messstrahldurchmesser $d_M$ im Wesentlichen dem Durchmesser des am Messpunkt (13) des Objektes (13a) auftreffenden Messstrahls entspricht.

**23.** Verfahren zur optischen Vermessung eines Objektes nach einem der Ansprüche 20 oder 21,
**dadurch gekennzeichnet,**
**dass** der Messstrahl über eine Fokussiereinrichtung auf den Messpunkt (13) auf dem Objekt (13a) fokussiert wird,
**dass** der Messstrahl im Wesentlichen monochromatisch mit einer Wellenlänge λ ist oder einen Lichtstrahl mit Teillichtstrahlen mehrerer Wellenlängen, wobei in etwa λ der Mittelwert der Wellenlängen der Teillichtstrahlen ist und **dass** der Messstrahldurchmesser $d_M$ durch die Formel

$$d_M = \frac{1.22\ \lambda}{NA}$$

vorgegeben ist, wobei *NA* im Wesentlichen der numerischen Apertur der Fokussiereinrichtung entspricht.

24. Verfahren zur optischen Vermessung eines Objektes nach einem der Ansprüche 20 bis 23,
**dadurch gekennzeichnet,**
**dass** die vorgegebene Länge *l* mindestens $d_M$ beträgt, insbesondere dass *l* in etwa das zwanzigfache von $d_M$ beträgt.

25. Verfahren zur optischen Vermessung eines Objektes nach einem der Ansprüche 20 bis 24,
**dadurch gekennzeichnet,**
**dass** die vorgegebene maximale Temperaturdifferenz T maximal 500°C beträgt, insbesondere dass T mit etwa 100°C vorgegeben ist.

26. Verfahren zur optischen Vermessung eines Objektes nach einem der Ansprüche 19 bis 25,
**dadurch gekennzeichnet,**
**dass** in Schritt D mindestens zwei Messvorgänge durchgeführt werden, in denen jeweils die Messsignale des Detektors gemessen werden, wobei zwischen den beiden Messvorgängen eine Pause von mindestens einer vorgegebenen Zeitspanne $t_p$ durchgeführt wird, in der keine Messsignale gemessen werden und der Messpunkt (13) auf dem Objekt (13a) nicht mit dem Messstrahl bestrahlt wird,
insbesondere, dass $t_P$ mindestens

$$t_P \geq \frac{c\ \rho\ d_M^3\ (l - d_M)}{\eta\ d_M^3}$$

beträgt.

27. Verfahren zur optischen Vermessung eines Objektes nach einem der Ansprüche 18 bis 26,
**dadurch gekennzeichnet,**
**dass** in Schritt D die Messsignale des Detektors (16) erst nach einer Vorlaufzeitspanne $t_{vor}$ Daten des Detektors (16) gemessen werden, wobei während $t_{vor}$ der Messpunkt (13) auf dem Objekt (13a) mit dem Messstrahl beleuchtet wird.

Figur 1

EP 1 813 962 A1

**EP 1 813 962 A1**

Europäisches
Patentamt

**EUROPÄISCHER RECHERCHENBERICHT**

Nummer der Anmeldung

EP 06 00 1676

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 43 13 076 A1 (TABARELLI, WERNER, DR., SCHAAN, LI; DR. JOHANNES HEIDENHAIN GMBH, 8330) 28. Oktober 1993 (1993-10-28) | 18 | INV.<br>G01S17/50<br>G01S17/08 |
| A | * Spalte 3, Zeile 9 - Spalte 4, Zeile 68; Abbildungen *<br>----- | 1-17,<br>19-27 | G01S7/491<br>G01B9/02<br>G01P3/36 |
| A | DE 44 14 514 A1 (DEICHL, KLAUS, 85221 DACHAU, DE) 2. November 1995 (1995-11-02)<br>* Seite 4, Zeile 66 - Seite 6, Zeile 65; Abbildungen *<br>----- | 1-27 | |
| A | US 5 317 376 A (AMZAJERDIAN ET AL) 31. Mai 1994 (1994-05-31)<br>* Spalte 3, Zeile 60 - Spalte 4, Zeile 29; Abbildungen *<br>----- | 1-27 | |
| | | | **RECHERCHIERTE SACHGEBIETE (IPC)**<br>G01S<br>G01B<br>G01P |

Der vorliegende Recherchenbericht wurde für alle Patentansprüche erstellt

| Recherchenort | Abschlußdatum der Recherche | Prüfer |
|---|---|---|
| Den Haag | 18. Juli 2006 | Devine, J |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 00 1676

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2006

| Im Recherchenbericht angeführtes Patentdokument | Datum der Veröffentlichung | Mitglied(er) der Patentfamilie | Datum der Veröffentlichung |
|---|---|---|---|
| DE 4313076        A1 | 28-10-1993 | AT        396526 B<br>AT         82892 A | 25-10-1993<br>15-01-1993 |
| DE 4414514        A1 | 02-11-1995 | KEINE | |
| US 5317376        A | 31-05-1994 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHRISTIAN REMBE ; ALEXANDER DRÄBENST-EDT.** The Laser-Scanning Confocal Vibrometer Microscope. *Optical Measurement Systems for Industrial Inspection IV, SPIE,* vol. 5856 (13-17), 698-709